(19) Europäisches Patentamt
European Patent Office
Office européen des brevets

(11) **EP 2 921 837 B1**

(12) **EUROPEAN PATENT SPECIFICATION**

(45) Date of publication and mention
of the grant of the patent:
**26.02.2020 Bulletin 2020/09**

(51) Int Cl.:
***G01L 9/00*** *(2006.01)*     ***G01L 19/02*** *(2006.01)*
***G01L 19/14*** *(2006.01)*

(21) Application number: **15159995.8**

(22) Date of filing: **20.03.2015**

(54) **Electrostatic capacitance type pressure sensor**

**ELEKTROSTATISCHER KAPAZITANZDRUCKSENSOR**

**CAPTEUR DE PRESSION À CAPACITÉ ÉLECTROSTATIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.03.2014 JP 2014058876**

(43) Date of publication of application:
**23.09.2015 Bulletin 2015/39**

(73) Proprietor: **Azbil Corporation
Chiyoda-ku
Tokyo 100-6419 (JP)**

(72) Inventors:
• **Ishihara, Takuya
Chiyoda-ku, Tokyo 100-6419 (JP)**
• **Tochigi, Hidenobu
Chiyoda-ku, Tokyo 100-6419 (JP)**
• **Yoshikawa, Yasuhide
Chiyoda-ku, Tokyo 100-6419 (JP)**
• **Sekine, Masashi
Chiyoda-ku, Tokyo 100-6419 (JP)**

(74) Representative: **Lavoix
Bayerstrasse 83
80335 München (DE)**

(56) References cited:
**JP-A- 2010 236 949**    **US-A1- 2004 226 382**
**US-A1- 2010 162 821**    **US-A1- 2013 189 160**
**US-A1- 2015 040 674**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 921 837 B1

**Description**

FIELD OF TECHNOLOGY

The present invention concerns an electrostatic capacitance type pressure sensor provided with a pressure sensor chip having a diaphragm structure for detecting an electrostatic capacitance in accordance with the pressure of a medium to be measured.

BACKGROUND

Conventionally, pressure sensors of a diaphragm type for detecting a change in a pressure of a medium to be measured as a change in electrostatic capacitance are widely known. As one example of the pressure sensor, there is known an electrostatic capacitance type pressure sensor that prevents non-reacted products, side reaction products, particulates and the like from getting into a vacuum gauge from a vacuum chamber by covering a communicating hole between the vacuum chamber and a diaphragm vacuum gauge with a filter and that prevents adhesion and accumulation of deposition components of these products and particles on the diaphragm (See, for example, Japanese Unexamined Patent Application Publication H10-153510).

The electrostatic capacitance type pressure sensor disclosed in the JP H10-153510 can reduce the adhesion of those deposition components having high linearity contained in the medium to be measured to the diaphragm. However, it is impossible to completely eliminate the deposition components by using the filter due to necessity of leading the pressure of the medium to be measured to the diaphragm.

The adhesion and the accumulation of a portion of the deposition components in the medium to be measured on the diaphragm result in bending the diaphragm in one direction, and a zero-point shift (a movement of the zero point) occurs. That is, the deposition adhered on the diaphragm generates an internal stress such as a compressive stress or tensile stress in response to the components of the deposition. When the stress is generated, the surface of the diaphragm on the side in contact with the medium to be measured is pulled or compressed, and the balance of forces in a thickness direction of the diaphragm is lost. Accordingly, the diaphragm bends in such a manner that the side in contact with the medium becomes a projected state or that its opposite side becomes a projected state.

It is impossible to always match the depositions which are different for the each medium to be measured and the materials of the diaphragms. In addition, it is rare that the deposition perfectly coincides with an atom array of the diaphragm microscopically. Therefore, as stated above, the deposition adhered on the diaphragm causes its contractions or elongations. Consequently, the deflection of the diaphragm becomes larger as the amount of the deposition adhered on the diaphragm increases.

An electrostatic capacitance type pressure sensor detects a pressure difference based on the electrostatic capacity that varies according to the deflection of the diaphragm. If the diaphragm bends due to the adhesion of the deposition on the diaphragm, the pressure sensor detects a signal indicating that 'there is a pressure difference' even in a state of no difference in pressure between the both sides of the diaphragm. Accordingly, a zero-point error called a "zero-point shift" is caused, and errors in pressure measurement are produced. In order to avoid the errors in the pressure measurement, frequent replacement of the electrostatic capacitance type pressure sensor is required. Thereby a problem of high cost also occurs.

Hence, an electrostatic capacitance type pressure sensor capable of suppressing the deflection of the diaphragm resulting from the internal stresses of the deposition by making the thickness of the central portion of the diaphragm thinner than that of the peripheral edge portion to make the rigidity of the central portion lower than the rigidity of the peripheral edge portion is proposed (See, for example, Japanese Unexamined Patent Application Publication 2010-236949).

In the electrostatic capacitance type pressure sensor disclosed in the JP 2010-236949, a step part is formed between the peripheral edge portion and the central portion of a surface on the pressure introduction chamber side of the diaphragm. The diaphragm can be divided into a region on the central portion side and a region on the peripheral edge side at the step part as a boundary. The thickness of the region on the central portion side is formed thinner than that of the region on the peripheral edge side. Therefore, in a case of the adhesion and the accumulation of the deposition components in the medium to be measured on the surface of the diaphragm in contact with the medium, the region of the diaphragm on the peripheral edge side is slightly bent toward the pressure introduction chamber side, and the region on the central portion side is slightly bent toward a reference vacuum chamber side (see Fig.4 of the JP 2010-236949). Or the region of the diaphragm on the peripheral edge side is slightly bent toward the reference vacuum chamber side, and the region on the central portion side is slightly bent toward the pressure introduction chamber side (see Fig.5 of the JP 2010-236949). Accordingly, the deflection of the diaphragm resulting from the internal stresses of the deposition can be suppressed.

DISCLOSURE OF THE INVENTION

PROBLEM SOLVED BY THE PRESENT INVENTION

The electrostatic capacitance type pressure sensor disclosed in the JP 2010-236949 assumes that the deposition forms a uniform film on the diaphragm. However, in practice the deposition of a film on the diaphragm is unavoidable, and in addition, there is also a film deposition process that produces a deviation in the distribution of the film thickness or internal stress of the film (film stress) due to process materials, processing conditions, structures of the vacuum gauge, positions of the vacuum gauge and so forth. In such a case, the aforementioned assumption is not satisfied. Below, by mentioning ALD (Atomic Layer Deposition) as a specific example, the principles of ALD and speculations about the factors that produce the deviation in the distribution of the film thickness or the film stress will be described.

An electrostatic capacitance type pressure sensor is, for example, disposed within a chamber used in a semiconductor manufacturing process, and is used as a vacuum gauge. In this semiconductor manufacturing process, ALD (Atomic Layer Deposition), which is used primarily to form an insulating film, is a film deposition method premised on chemical reactions on a substrate surface of an object to be film formed. The film is formed by causing alternative surface reaction between a material gas containing an element of the film to be deposited, known as a precursor gas, and a reactive gas (which, in many cases, is an oxidizing material gas). For example, in a case of performing a film deposition of an AIO film, trimethyl aluminum is used as the precursor gas, and $H_2O$, $O_3$ or the like are used as the reactive gas (the oxidizing material gas).

More specifically, ALD repeats a cycle such as the following (A) through (D):

(A) The precursor gas is introduced into a chamber and is chemically absorbed on the surface of a wafer.
(B) The unnecessary precursor gas other than one atomic layer chemically reacted on the surface of the wafer is purged (removed) by sucking the chamber to a vacuum or by introducing an inert gas into the chamber.
(C) The reactive gas is introduced into the chamber and caused to react with the precursor gas.
(D) The reaction products and the excess reactive gas are purged by sucking the chamber to a vacuum or by introducing an inert gas into the chamber.

Thus, it is characteristic that ALD can uniformly form a film on locations such as via holes having a large aspect ratio and complex three-dimensional structures on a wafer because film deposition is performed layer by layer at an atomic level by absorption of the material gas on the surface of the wafer and chemical reaction between the absorbed material gas and the reactive gas. On the other hand, however, the film deposition is performed not only on the wafer but also on all places in the process chamber, including the vacuum gauge, thereby often causes the problems mentioned above.

Next, speculations about the reasons why a non-uniform film is partially formed in ALD even though ALD should form a uniform film in principle will be described. In the film deposition onto the process wafer through ALD, if unnecessary gas is not sufficiently purged, the excess precursor gas uncombined with the wafer other than the one layer chemically reacted on the surface of the wafer resides there and causes a chemical reaction to the next reactive gas. Since coupling between the reaction products thus produced and the substrate is naturally weak, film stress of the regions is relatively smaller than that when the purge is performed sufficiently. Furthermore, since coupling between the reaction products and the substrate is weak, the reaction products are easily removed from the substrate at some timing. In the case of removing, it is thought that the film thickness is relatively thinned because the removed parts were merely hindrances to the regular surface reaction layer by layer before being removed. Also, in the case that the purge is not performed sufficiently, there is a possibility that a gas phase reaction instead of the surface reaction is performed by mixing the precursor gas and the reactive gas in the chamber. In such a case, it is thought that the film deposition is not performed satisfactorily since undesirable particles of the reaction products are generated in the gas phase and are deposited on the substrate. Thus, in the case that the purge is not performed sufficiently, coupling in the film is weak and foreign matters exist in the film at such places. Thereby, the film has a poor quality and generated film stress becomes small. Moreover, since some parts of the film are easily removed compared to the other parts having a good quality, it is presumed that the film thickness is reduced as described above.

Normally the vacuum gauge is disposed at a peripheral part that is not an arranging position of the wafers to be processed in the inside of the chamber where the wafers are arranged. In many cases, the gas in the chamber is guided to the diaphragm through a piping. For this reason, it is supposed that gas replacement property in the vicinity of the diaphragm is poor compared with that on the wafer. Furthermore, if, depending on the structure in the vicinity of the diaphragm, there is a region having a poor gas conductance (degree of ventilation) on the diaphragm partially, the film deposition is not performed satisfactorily in the region due to the poor gas replacement property. Consequently, it is expected that the film deposited on the diaphragm is thinned, and the generated stress is reduced in the region compared with the other regions having a good conductance.

As stated above, in the case of using ALD, it is highly likely that in principle the film deposition onto the diaphragm is unavoidable, and the distribution of the film thickness or the film stress on the diaphragm has a deviation depending on the process materials, the processing conditions, the structure of the vacuum gauge, the position of the vacuum gauge and the like.

The electrostatic capacitance type pressure sensor disclosed in the JP 2010-236949 assumes that the deposition forms a uniform film on the diaphragm. Therefore, if the distribution of the film thickness or the film stress on the diaphragm has a deviation, balance of bending moment is lost, and deflection of the diaphragm cannot be suppressed, so that the zero-point shift cannot be restrained.

In particular, in the electrostatic capacitance type pressure sensor disclosed in the JP 2010-236949, an opening of a pressure introducing hole for introducing the medium to be measured into a pressure introduction chamber is arranged so as to face the center part of the diaphragm, and the gas conductance is good in the center part of the diaphragm, where the electrode for detecting the pressure is disposed, and the gas conductance is poor at the outer peripheral part of the diaphragm. Therefore, the film deposited in the central part of the diaphragm becomes relatively thick or has a large film stress, and a large moment is generated by the film stress, so a large zero-point shift occurs.

Other capacitive pressure sensors are known from US 2010/0162821, US 2004/0226382 and US 2013/0189160.

The present invention is to solve the problem set forth above, and an object thereof is to provide an electrostatic capacitance type pressure sensor capable of suppressing the zero-point shift, not only when the film deposited on the diaphragm is homogeneous but also when the distribution of the film quality on the diaphragm has a deviation. Here, 'homogeneous' means that the film thickness and the generated film stress are uniform.

MEANS FOR SOLVING THE PROBLEM

In order to achieve the above-mentioned object, an electrostatic capacitance type pressure sensor according to claim 1 is provided.

In a case that a film is homogeneously formed as a whole (hereinafter referred to as a uniform film system), the step as described in the JP 2010-236949 provides an effect. On the other hand, in a case that a film is non-uniformly formed on the diaphragm due to the gas conductance (degree of ventilation) (hereinafter referred to as a non-uniform film system), parts where the film becomes thick (or where the film stress becomes large) on the diaphragm are determined by the relative conductance at the parts, regardless of a position of the step. In general, when the film thickness is sufficiently smaller than the substrate, a bending moment caused by the film stress is proportional to the film thickness and the film stress. Therefore, a relatively large bending moment occurs at the parts compared to the other parts where the film is thin. However, the step structure described in the JP 2010-236949 adjusts the bending moment by the film stress applied to the diaphragm and decreases displacement of the diaphragm on the assumption that the film is homogeneous on the diaphragm. Therefore, if the bending moment becomes locally large as described above, the entire balance is lost and the step does not provide the effect. As stated above, the present inventors shed light on the mechanism of the generation of problems in the non-uniform film system. Moreover, they found that when the case of non-uniform film is assumed, it is possible to form a thick (or large stress) film with deposits on the step part intentionally by shifting the position of the opening of the pressure introducing hole for introducing the medium to be measured into the pressure introduction chamber from the center position to a position almost above the step part, and so that the effect of the step can be utilized. Thus, the problems can be solved in both cases of the uniform film system and the non-uniform film system.

EFFECTS OF THE INVENTION

According to the present invention, the plurality of pressure introducing holes are provided in the cover plate so that the openings thereof facing the pressure introduction chamber are positioned in the vicinity of the step part of the diaphragm in the direction parallel to the surface of the diaphragm, thus enabling to alleviate the moment caused by the film stress increased by poor balance in the conductance (degree of ventilation) of the medium to be measured by forming a thick (or large stress) film with deposits on the step part intentionally. Accordingly, the present invention makes it possible to suppress the zero-point shift, not only when the film deposited on the diaphragm has a uniform film thickness and a uniform film stress but also when the distribution of the film thickness on the diaphragm has a deviation.

BRIEF DESCRIPTION OF THE DRAWINGS

FIG. 1 is a cross-sectional diagram illustrating the structure of an electrostatic capacitance type pressure sensor according to an embodiment of the present invention.
FIG. 2 is a plan view diagram illustrating the arrangement of the pressure sensing side fixed electrode and the reference side fixed electrode formed on the sensor pedestal.
FIG. 3 is a diagram for explaining the operation of the electrostatic capacitance type pressure sensor according to an embodiment of the present invention.
FIG. 4 is a diagram showing a state that a thick film with deposits is formed on the step part (in the vicinity of the step) of the diaphragm.
FIG. 5 is a diagram illustrating the relationship between the ratio of the film thickness when changing the position of the pressure introducing holes and the shift amount of the sensor output (characteristics HV in a case of 'with a step').
FIG. 6 is a diagram illustrating a structure of a conventional electrostatic capacitance type pressure sensor.
FIG. 7 is a diagram illustrating the relationship between the ratio of the film thickness when changing the position of the pressure introducing holes and the shift amount of the sensor output (characteristics I'~IV' in a case of 'flat').

FORM FOR CARRYING OUT THE INVENTION

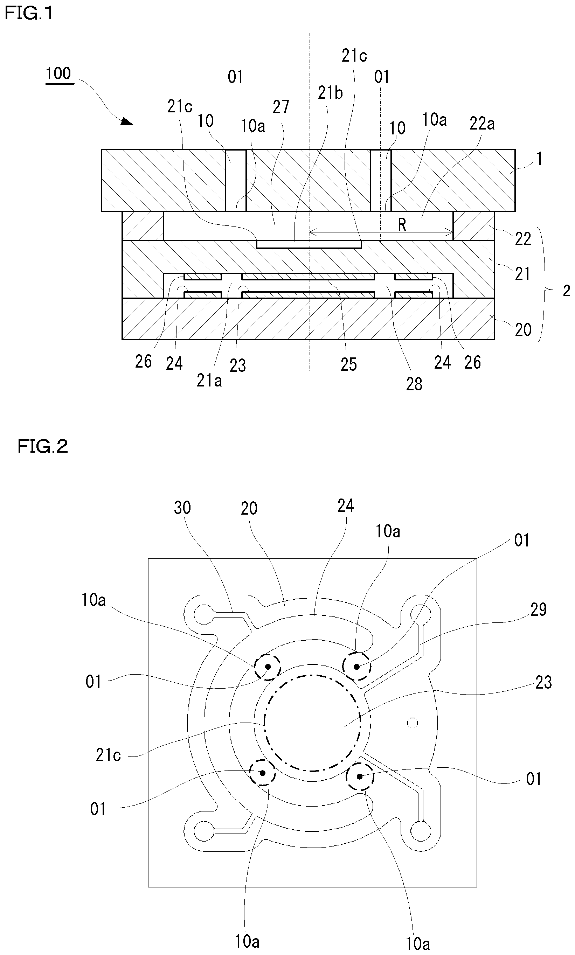

Below, forms for carrying out the present invention will be explained in detail in reference to the figures. FIG. 1 is a cross-sectional diagram illustrating the structure of an electrostatic capacitance type pressure sensor according to an embodiment of the present invention.

The electrostatic capacitance type pressure sensor 100 comprises a cover plate 1 made of a sapphire that is a single crystal of aluminum oxide, and a pressure sensor chip 2 bonded to the cover plate 1.

The pressure sensor chip 2 comprises a sensor pedestal 20 made of a sapphire, a diaphragm 21 made of a sapphire bonded to the sensor pedestal 20, and a spacer 22 made of a sapphire bonded to the diaphragm 21.

With respect to the pressure sensor chip 2, a pressure sensing side fixed electrode 23 composed of a conductor such as platinum and a reference side fixed electrode 24 are formed on the sensor pedestal 20. In addition, a pressure sensing side movable electrode 25 composed of a conductor such as platinum and a reference side movable electrode 26 are formed on the diaphragm 21 so as to face the pressure sensing side fixed electrode 23 and the reference side fixed electrode 24.

A space of approximately circular shape in plan view is formed as a pressure introduction chamber 27 by providing a spacer 22 having a through-hole 22a of approximately circular shape in plan view between the cover plate 1 and the diaphragm 21. Moreover, a vacuum space of approximately circular shape in plan view is formed between the sensor pedestal 20 and the diaphragm 21 as a reference vacuum chamber 28 by providing a recessed part 21a of approximately circular shape in plan view on the surface of the diaphragm 21 at the sensor pedestal 20 side.

The sensor pedestal 20 and the diaphragm 21 are bonded together via an aluminum oxide-based bonding material to be changed into a sapphire after bonding. Similarly, the diaphragm 21 and the spacer 22 are bonded together via an aluminum oxide-based bonding material. Such a technique for bonding is described in detail in Japanese Unexamined Patent Application Publication 2002-111011, and thus detailed explanations are omitted here. Note that the spacer 22 may be omitted by forming a spacer-like projection on the bottom part of the cover plate 1.

FIG. 2 is a plan view diagram illustrating the arrangement of the pressure sensing side fixed electrode 23 and the reference side fixed electrode 24 formed on the sensor pedestal 20. The pressure sensing side fixed electrode 23 of approximately circular shape in plan view is formed on the surface of the sensor pedestal 20 at the reference vacuum chamber 28 side such that the center thereof substantially coincides with the center of the diaphragm 21. The reference side fixed electrode 24 of approximately circular-arc shape in plan view is formed on the surface of the sensor pedestal 20 at the reference vacuum chamber 28 side so as to be approximately concentrically disposed outside of the pressure sensing side fixed electrode 23. The pressure sensing side fixed electrode 23 is electrically connected with a signal processing device (not shown) external to the sensor through a wiring 29 formed on the sensor pedestal 20. Similarly, the reference side fixed electrode 24 is electrically connected with the signal processing device through a wiring 30 formed on the sensor pedestal 20.

The structure of the movable electrodes on the diaphragm 21 side is the same as that of the fixed electrodes. That is, the pressure sensing side movable electrode 25 of approximately circular shape in plan view is formed on the surface of the diaphragm 21 at the reference vacuum chamber 28 side so as to face the pressure sensing side fixed electrode 23. The center of the pressure sensing side movable electrode 25 substantially coincides with the center of the diaphragm 21. The reference side movable electrode 26 of approximately circular-arc shape in plan view is formed on the surface of the diaphragm 21 at the reference vacuum chamber 28 side so as to face the reference side fixed electrode 24. The reference side movable electrode 26 is approximately concentrically disposed outside of the pressure sensing side movable electrode 25. The pressure sensing side movable electrode 25 is electrically connected with the signal processing device external to the sensor through a wiring (not shown) formed on the diaphragm 21. Similarly, the reference side movable electrode 26 is electrically connected with the signal processing device through a wiring (not shown) formed on the diaphragm 21.

The pressure sensing side fixed electrode 23 and the pressure sensing side movable electrode 25 are highly sensitive to pressure, and act to perform the pressure measurement. The reference side fixed electrode 24 and the reference side movable electrode 26 have low sensitivity to pressure, and act to correct the permittivity between the electrodes.

A circular recessed part (a stepped surface) 21b is formed on the surface of the diaphragm 21 (a contact surface with the medium to be measured) at the side of the pressure introduction chamber 27. In other words, the diaphragm 21 has a step part 21c between a peripheral edge part and a center part on the side of the pressure introduction chamber 27, and is divided into a region on the center part side and a region on the peripheral edge side at the step part 21c as a boundary. The region on the center part side is given as the stepped surface 21b, and a thickness of the stepped surface 21b is formed thinner than that of the region on the peripheral edge side. In Fig.2, the step part 21c is shown by a chain line such that the position of the stepped surface 21b is identifiable.

In FIG.1, as apparent from the fact that the recessed part 21a and the through-hole 22a are approximately circular in plan view, the diaphragm 21 exposed to the pressure introduction chamber 27 and the reference vacuum chamber 28 is approximately circular in plan view. The position of the step part 21c on the diaphragm 21 is defined as 49.3% position from the center of the diaphragm 21 along the surface direction of the diaphragm 21 (a parallel direction to the paper surface in FIG.2), wherein the distance from the center of the diaphragm 21 to the inner wall of the spacer 22 is defined as a radius R of the diaphragm 21, and the radius R of the diaphragm 21 is defined as 100%.

The cover plate 1 and the spacer 22 of the pressure sensor chip 2 are bonded together via an aluminum oxide-based bonding material to be changed into a sapphire after bonding. A plurality of pressure introducing holes 10 adapted to introduce the medium to be measured into the pressure introduction chamber 27 are formed in the cover plate 1. The pressure introducing holes 10 are through-holes formed in the direction vertical to the surface of the diaphragm 21.

In this embodiment, there are four pressure introducing holes 10. Their openings 10a are positioned in the vicinity of the step part 21c of the diaphragm 21 in the direction parallel to the surface of the diaphragm 21. In addition, the pressure introducing holes 10 are arranged on the circumference enclosing the center of the diaphragm 21 (on the circumference of a circle having a center coincident with the center of the diaphragm 21) in the circumferential direction at even intervals. In FIG.2, the openings 10a are shown by dotted lines such that the positions of the pressure introducing holes 10 are identifiable. Specific dimensions such as diameters of the pressure introducing holes 10 are mentioned later.

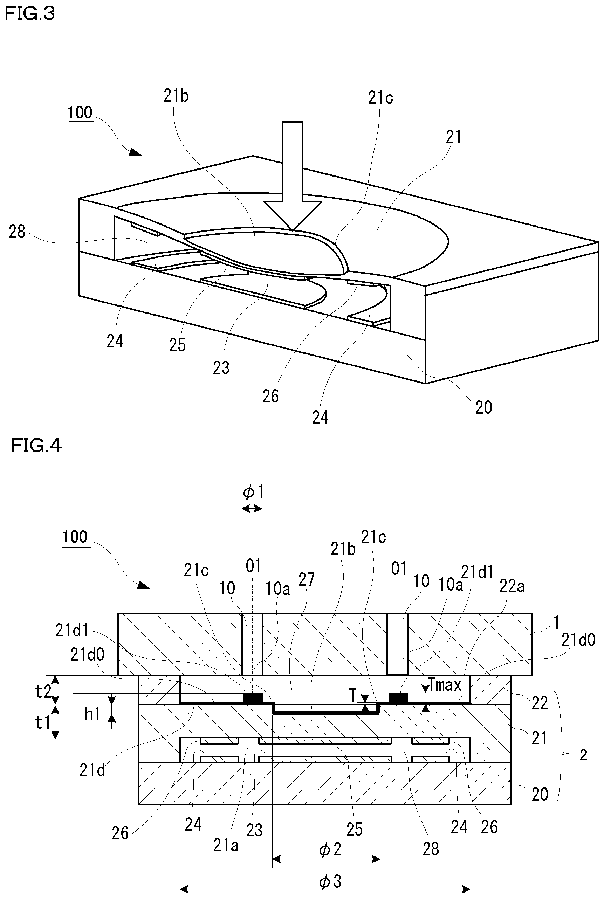

Next, the operation of the electrostatic capacitance type pressure sensor 100 is explained. FIG. 3 is a diagram for explaining the operation of the electrostatic capacitance type pressure sensor 100. When the medium to be measured is introduced into the pressure introduction chamber 27 through the pressure introducing hole 10 from a direction crossing with the surface of the diaphragm 21 (in this embodiment, the direction perpendicular to the surface of the diaphragm 21), the diaphragm 21 deforms in accordance with the pressure of the medium, as shown in FIG. 3. When the electrostatic capacitance type pressure sensor 100 is used as a vacuum gauge in a semiconductor manufacturing process, the medium is the gas within the chamber.

When the diaphragm 21 deforms, the distance between the sensor pedestal 20 and the diaphragm 21 (the height of the reference vacuum chamber 28) changes, and the capacitance between the pressure sensing side fixed electrode 23 and the pressure sensing side movable electrode 25 and the capacitance between the reference side fixed electrode 24 and the reference side movable electrode 26 are changed. Where Cx is the capacitance between the pressure sensing side fixed electrode 23 and the pressure sensing side movable electrode 25 and Cr is the capacitance between the reference side fixed electrode 24 and the reference side movable electrode 26, the sensor output K is calculated by the following formula:

$$K = (Cx - Cr)/Cx \quad \cdots \quad (1).$$

The signal processing device not shown calculates the sensor output K by the formula (1), and converts the sensor output K (a capacitance value) into a pressure value, to thereby measure the pressure of the medium.

Next, the pressure introducing holes 10 in the cover plate 1 are explained. In this embodiment, in order to control the conductance of the medium in the pressure introduction chamber 27, the openings 10a are positioned in the vicinity of the step part 21c of the diaphragm 21 in the direction parallel to the surface of the diaphragm 21, and the four pressure introducing holes 10 are arranged on the circumference enclosing the center of the diaphragm 21, to thereby control the distribution of the film thickness of the deposits adhered on the diaphragm 21 and form a thick film with the deposits on the stepped portion (in the vicinity of the step part 21c) intentionally.

FIG. 4 shows a state that a thick film with deposits is formed on the stepped portion (in the vicinity of the step part 21c). In FIG.4, 21d denotes a film with deposits formed on the surface of the diaphragm 21 at the side of the pressure introduction chamber 27, and a thick film 21d1 is formed on the stepped portion (in the vicinity of the step part 21c) of the diaphragm 21 by the medium introduced through the pressure introducing holes 10.

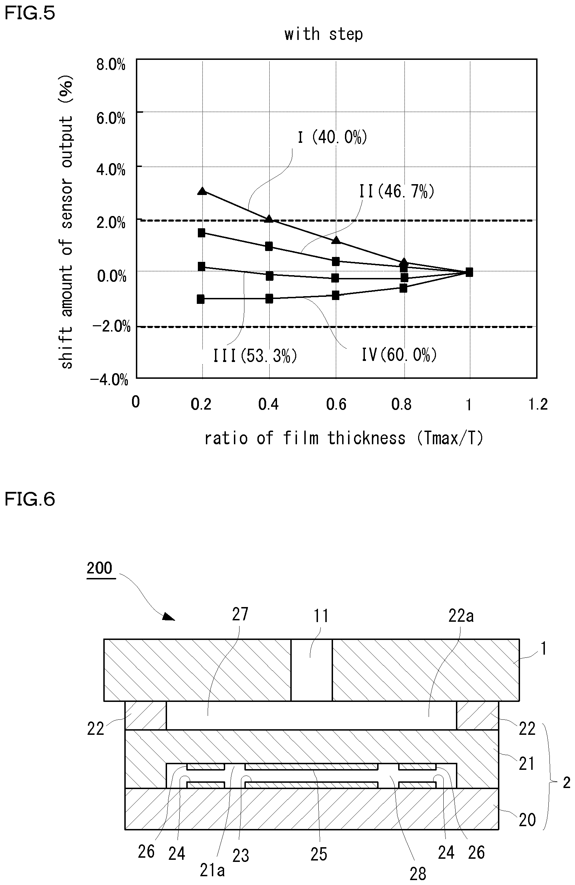

FIG. 5 is a diagram illustrating the relationship between the ratio of the film thickness when changing the position of the pressure introducing holes 10 and the shift amount of the sensor output, and the shift amount of the sensor output when the positions of the pressure introducing holes 10 are changed in a range of 40.0% to 60.0% from the center of the diaphragm 21 along the surface direction of the diaphragm 21 is calculated by the numerical analysis simulation, wherein the radius R of the diaphragm 21 is defined as 100%.

In FIG.5, the characteristic I shows the relationship between the ratio of the film thickness and the shift amount of the sensor output in a case that the position of the pressure introducing holes 10 is 40.0%. The characteristic II shows it in a case that the position of the pressure introducing holes 10 is 46.7%. The characteristic III shows it in a case that the position of the pressure introducing holes 10 is 53.3%. The characteristic IV shows it in a case that the position of the pressure introducing holes 10 is 60.0%.

In this embodiment, the shift amount of the sensor output is calculated in a case that a diameter $\phi 1$ of the pressure introducing hole 10 is 0.5mm, a depth h1 of the stepped surface 21b is 0.5$\mu$m, a diameter $\phi 2$ of the stepped surface 21b is 3.7mm, an inner diameter $\phi 3$

of the spacer 22 is 7.5mm, a thickness t1 of the diaphragm 21 is 50μm, a thickness t2 of the spacer 22 is 90μm and the four pressure introducing holes 10 are arranged on the circumference enclosing the center of the diaphragm 21. Although there is another example that a depth h1 of the stepped surface 21b is 32μm and a thickness t1 of the diaphragm 21 is 240μm, the same results are obtained even in such a case. These values described here such as the diameter φ1 of the pressure introducing hole 10 are only an example, and it goes without saying that different values can be used according to design.

In FIG.5, the ratio T/Tmax is shown along the horizontal axis, wherein the film thickness of the thickest part of the deposits adhered on the diaphragm 21 is defined as Tmax, and the film thickness of a thin part is defined as T. In other words, it shows the film thickness ratio of the thickness Tmax of the thick film 21d1 formed on the surface of the diaphragm 21 at the side of the pressure introduction chamber 27 to the thickness T of its peripheral thin film 21d0.

In FIG.5, the shift amount of the sensor output, which is expressed as a percentage of the shift amount of the sensor output of the electrostatic capacitance type pressure sensor 100 of this embodiment to the sensor output of a conventional electrostatic capacitance type pressure sensor, is shown along the vertical axis. Here, FIG.6 shows a structure of the conventional electrostatic capacitance type pressure sensor used for comparison.

In FIG.6, the same features of FIG.1 are denoted by the same reference signs. As shown in FIG.6, in the conventional electrostatic capacitance type pressure sensor 200, a pressure introducing hole 11 is formed at the position of the center of the diaphragm 21. Furthermore, the stepped surface 21b is not provided on the diaphragm 21. The area of the pressure introducing hole 11 is equal to the total area of the four pressure introducing holes 10. In the conventional electrostatic capacitance type pressure sensor 200, the deposition becomes thickest in the vicinity of the center of the diaphragm directly under the pressure introducing hole 11, whereas in the electrostatic capacitance type pressure sensor 100 of this embodiment, the deposition becomes thickest at the stepped portion (in the vicinity of the step part 21c) directly under the pressure introducing holes 10 arranged outer side than the center of the diaphragm 21.

Where K0 is the sensor output of the conventional electrostatic capacitance type pressure sensor 200 when no pressure is applied to the diaphragm 21, and, similarly, K1 is the sensor output of the electrostatic capacitance type pressure sensor 100 of this embodiment when no pressure is applied to the diaphragm 21, the shift amount SR of the sensor output is calculated by the following formula:

$$SR = (K1 - K0)/K0 \times 100 \quad \cdots \quad (2).$$

Note that if a uniform film is formed (the ratio of the film thickness is 1) on the diaphragm 21 of the electrostatic capacitance type pressure sensor 100 of this embodiment, then the shift amount SR of the sensor output will be 0%.

As being understood by comparison of the characteristics I to IV shown in FIG.4, when the positions of the pressure introducing holes 10 are 53.3% (characteristic III), namely, in a design that the position is closest to 'right above' the step part 21c, the fluctuation of the shift amount of the sensor output with respect to the ratio of the film thickness is small, and the shift amount of the sensor output approximates 0.0%. That is, it is shown that the moment is alleviated most successfully.

Moreover, even when the positions of the pressure introducing holes 10 are 46.7% (characteristic II) or 53.3% (characteristic IV), although the fluctuation of the shift amount of the sensor output with respect to the ratio of the film thickness becomes slightly larger, the shift amount of the sensor output is within a range of -2.0% to 2.0%. Therefore, good results can be obtained.

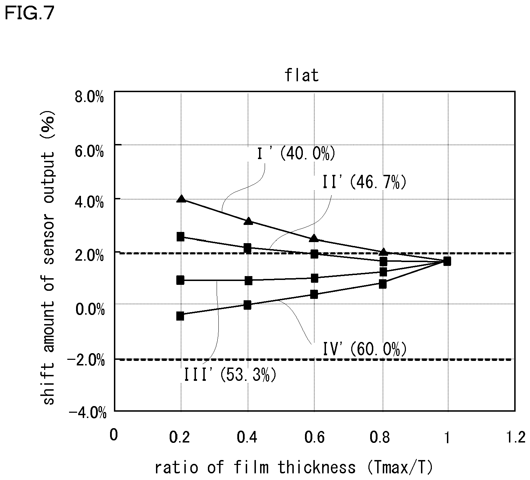

Even when the positions of the pressure introducing holes 10 are 60.0% (characteristic I), an improvement effect by the present invention can be obtained. However, if the ratio of the film thickness becomes smaller, the shift amount of the sensor output will exceed 2.0%. In addition, in some cases, the shift amount of the sensor output in the case of without providing the stepped surface 21b is smaller than that in the case of providing the stepped surface 21b, depending on the ratio of the film thickness. The case of providing the stepped surface 21b is defined as 'with a step', and the case of without providing the stepped surface 21b is defined as 'flat'. FIG. 7 shows characteristics I'~IV' in the case of 'flat', corresponding to the characteristics I~IV in the case of 'with a step' as shown in FIG.5.

According to calculations and experiments done by the present inventors, it is found that it is preferable that a center O1 of each opening 10a of the plurality of pressure introducing holes 10 facing the pressure introduction chamber 27 is arranged so as to be within a range of ±5% of radius R of the diaphragm 21 to the step part 21c of the diaphragm 21 in the direction parallel to the surface of the diaphragm 21. In addition, results of the calculations and experiments show that if the center O1 of each opening 10a of the plurality of pressure introducing holes 10 is arranged so as to be within a range of ±15% of radius R of the diaphragm 21 to the step part 21c of the diaphragm 21, although its effect is smaller than that of the case of ±15%, it is more effective than doing nothing at all.

As stated above, in this embodiment, the plurality of pressure introducing holes 10 are provided in the cover plate 1, and the openings 10a of the plurality of pressure introducing holes 10 facing the pressure introduction chamber 27 are positioned in the vicinity of the step part 21c of the diaphragm 21 in the direction parallel to the surface of the diaphragm 21, to thereby form a thick film 21d1 with the deposits on the stepped portion (in the vicinity of the step part 21c) intentionally. Therefore, the present invention of this embodiment makes it possible to alleviate the moment caused by the film stress increased by poor balance in the conductance (degree of ventilation) of the medium to be measured, and to suppress the zero-point shift, not only when the film 21d deposited on the diaphragm 21 has a uniform film thickness but also when the distribution of the film thickness on the diaphragm 21 has a deviation.

In this embodiment, as described above, the number of the pressure introducing holes 10 is four. However, it goes without saying that the number of the pressure introducing holes 10 is not limited to four. In addition, in this embodiment described above, the position of the step part 21c is defined as 49.3% position from the center of the diaphragm 21 along the surface direction of the diaphragm 21. However, the position is not limited to 49.3%. As a result of the calculations and experiment done by the present inventors, it is found that it is preferable that the position of the step part 21c is within a range of 25 to 75% from the center of the diaphragm 21 along the surface direction of the diaphragm 21.

Additionally, in this embodiment described above, the pressure introducing holes 10 are provided in a vertical direction to the surface of the diaphragm 21. However, the pressure introducing holes 10 may be provided diagonally to the surface of the diaphragm 21 for introducing the medium to be measured into the pressure introduction chamber 27 from the diagonal direction.

Additionally, in this embodiment described above, the step part 21c may not necessarily be a vertical step part, or a sloping step may be used.

While the present invention is explained by referring to the example of the embodiment as described above, the present invention is not limited to the embodiment above. Moreover, in the embodiment described above, the numerical value simulation is executed by changing the ratio T/Tmax of the film thickness Tmax at a thickest part with the deposition adhered on the diaphragm 21 and the film thickness T at a thin part, and by assuming that the film stress is a constant. However, even if the ratio T/Tmax is replaced by a ratio $\sigma/\sigma max$ of a stress $\sigma max$ at a part having strong stress and a stress $\sigma$ at a part having a weak stress, if the film thickness is sufficiently thin as compared with the thickness of the diaphragm, the same effects can be obtained, since the bending moment generated on the diaphragm by the film stress is proportional to the product of the film thickness and the film stress. Note that the configuration and details of the present invention may be variously changed so as to be understandable by a person skilled in the art within the gist of the present invention.

EXPLANATION OF REFERENCE SIGNS

1: cover plate, 2: pressure sensor chip, 10: pressure introducing hole, 10a: opening, 20: sensor pedestal, 21: diaphragm, 21a: recessed part, 21b: recessed part (stepped surface), 21c: stepped part, 21d: film, 21d0: thin film, 21d1: thick film, 22: spacer, 22a: through-hole, 23: pressure sensing side fixed electrode, 24: reference side fixed electrode, 25: pressure sensing side movable electrode, 26: reference side movable electrode, 27: pressure introduction chamber, 28: reference vacuum chamber, 29 and 30: wiring, 100: electrostatic capacitance type pressure sensor.

**Claims**

1. An electrostatic capacitance type pressure sensor comprising:

    a diaphragm (21) having a center part displacing in accordance with a pressure of a medium to be measured;
    a sensor pedestal (20) that is adapted to secure a peripheral edge part of the diaphragm (21) and to form a reference vacuum chamber (28) in cooperation with the diaphragm (21);
    a cover plate (1) bonded to the peripheral edge part of the diaphragm (21) on the opposite side from the sensor pedestal (20), the cover plate (1) being adapted to form a pressure introduction chamber (27) in cooperation with the diaphragm (21);
    a fixed electrode formed on a surface of the sensor pedestal (20) on the side of the reference vacuum chamber (28); and
    a movable electrode formed on a surface of the diaphragm (21) on the side of the reference vacuum chamber (28) so as to face the fixed electrode, wherein
    the diaphragm (21) has a step part (21c) between a peripheral edge part and a center part on the side of the pressure introduction chamber (27), and is divided into a region on the center part side and a region on the peripheral edge side at the step part (21c) as a boundary, a thickness of the region on the center part side being formed thinner than that of the region on the peripheral edge side, **characterised in that**:
    the cover plate (1) has a plurality of pressure introducing holes (10) adapted to introduce the medium to be measured into the pressure introduction chamber (27) from a direction crossing the surface of the diaphragm (21), a center of each opening (10a) of the plurality of pressure introducing holes (10) facing the pressure introduction chamber (27) being arranged so as to be within a range of $\pm15\%$ of the radius of the diaphragm (21) from the step part (21c) of the diaphragm (21) in the direction parallel to the surface of the diaphragm (21).

**2.** The electrostatic capacitance type pressure sensor according to Claim 1, wherein the openings (10a) of the plurality of pressure introducing holes (10) facing the pressure introduction chamber (27) are arranged on a circumference enclosing the center of the diaphragm (21) in the circumferential direction at even intervals.

**3.** The electrostatic capacitance type pressure sensor according to Claim 1 or 2, wherein
a center of each opening (10a) of the plurality of pressure introducing holes (10) facing the pressure introduction chamber (27) is arranged so as to be within a range of ±5% of the radius of the diaphragm (21) from the step part (21c) of the diaphragm (21) in the direction parallel to the surface of the diaphragm (21).

**Patentansprüche**

**1.** Elektrostatischer Kapazitanzdrucksensor, umfassend:

eine Membran (21) mit einem zentralen Teil, der sich in Übereinstimmung mit einem Druck eines Mediums, das gemessen werden soll, verschiebt,
einen Sensorsockel (20), der ausgelegt ist, um einen Umfangs-Kantenteil der Membran (21) zu sichern und eine Referenz-Vakuumkammer (28) in Zusammenarbeit mit der Membran (21) zu bilden,
eine Abdeckplatte (1), die auf den Umfangs-Kantenteil der Membran (21) auf der gegenüber liegenden Seite vom Sensorsockel (20) gebunden ist, wobei die Abdeckplatte (1) angepasst ist um eine Druckeinführungskammer (27) in Zusammenarbeit mit der Membran (21) zu bilden;
eine feste Elektrode, gebildet auf einer Fläche des Sensorsockels (20) auf der Seite der Referenz-Vakuumkammer (28); und
eine bewegliche Elektrode, gebildet auf einer Fläche der Membran (21) auf der Seite der Referenz-Vakuumkammer (28), um der festen Elektrode gegenüber zu liegen, wobei
die Membran (21) einen Stufenteil (21c) zwischen einem Umfangs-Kantenteil und einem zentralen Teil auf der Seite der Druck-Einführungskammer (27) aufweist und zwischen einer Region auf der Seite des zentralen Teils und einer Region auf der Seite der peripheren Kante des Stufenteils (21c) als eine Grenze unterteilt ist, wobei eine Dicke der Region auf der Seite des zentralen Teils dünner als diejenige der Region auf der Seite der Umfangskante gebildet ist, **dadurch gekennzeichnet, dass**
die Abdeckplatte (1) eine Vielzahl von Druckeinführungslöchern (10) aufweist, die angepasst ist, um das Medium, das gemessen werden soll, in die Druckeinführungskammer (27) von einer Richtung einzuführen, die die Fläche der Membran (21) quert, wobei ein Zentrum jeder Öffnung (10a) der Vielzahl von Druckeinführungslöchern (10), die der Druckeinführungskammer (27) gegenüber liegt, derart angeordnet ist, dass sie innerhalb eines Bereichs von ±15 % des Radius der Membran (21) vom Stufenteil (21c) der Membran (21) in der Richtung parallel zur Fläche der Membran (21) liegt.

**2.** Elektrostatischer Kapazitanzdrucksensor nach Anspruch 1, wobei
die Öffnungen (10a) der Vielzahl von Druckeinführungslöchern (10), die der Druckeinführungskammer (27) gegenüber liegt, auf einem Umfang angeordnet sind, der das Zentrum der Membran (21) in der Umfangsrichtung in gleichen Intervallen einschließt.

**3.** Elektrostatischer Kapazitanzdrucksensor nach Anspruch 1 oder 2, wobei
ein Zentrum jeder Öffnung (10a) der Vielzahl von Druckeinführungslöchern (10), die der Druckeinführungskammer (27) gegenüber liegt, derart angeordnet ist, dass es innerhalb eines Bereichs von ±5 % des Radius der Membran (21) vom Stufenteil (21c) der Membran (21) in der Richtung parallel zur Fläche der Membran (21) liegt.

**Revendications**

**1.** Capteur de pression du type à capacitance électrostatique comprenant :

une membrane (21) comportant une partie centrale se déplaçant conformément à une pression d'un milieu à mesurer ;
un socle de capteur (20) qui est conçu pour fixer une partie de bord périphérique de la membrane (21) et pour former une chambre à vide de référence (28) en coopération avec la membrane (21) ;
une plaque de recouvrement (1) liée à la partie de bord périphérique de la membrane (21) du côté opposé au socle de capteur (20), la plaque de recouvrement (1) étant conçue pour former une chambre d'introduction de pression (27) en coopération avec la membrane (21) ;
une électrode fixe formée sur une surface du socle de capteur (20) du côté de la chambre à vide de référence (28) ; et
une électrode mobile formée sur une surface de la membrane (21) du côté de la chambre à vide de référence (28) de manière à faire face à l'électrode fixe, dans lequel

la membrane (21) comporte une partie étagée (21c) entre une partie de bord périphérique et une partie centrale du côté de la chambre d'introduction de pression (27), et est divisée en une région du côté de partie centrale et une région du côté de bord périphérique au niveau de la partie étagée (21c) en tant que frontière, une épaisseur de la région du côté de partie centrale étant inférieure à celle de la région du côté de bord périphérique, **caractérisé en ce que** :

la plaque de recouvrement (1) comporte une pluralité d'orifices d'introduction de pression (10) conçus pour introduire le milieu à mesurer dans la chambre d'introduction de pression (27) à partir d'une direction croisant la surface de la membrane (21), un centre de chaque ouverture (10a) de la pluralité d'orifices d'introduction de pression (10) faisant face à la chambre d'introduction de pression (27) étant agencé de manière à être dans une plage de ± 15 % du rayon de la membrane (21) par rapport à la partie étagée (21c) de la membrane (21) dans la direction parallèle à la surface de la membrane (21).

2. Capteur de pression du type à capacitance électrostatique selon la revendication 1, dans lequel les ouvertures (10a) de la pluralité d'orifices d'introduction de pression (10) faisant face à la chambre d'introduction de pression (27) sont agencées sur une circonférence enfermant le centre de la membrane (21) dans la direction circonférentielle à des intervalles identiques.

3. Capteur de pression du type à capacitance électrostatique selon la revendication 1 ou 2, dans lequel un centre de chaque ouverture (10a) de la pluralité d'orifices d'introduction de pression (10) faisant face à la chambre d'introduction de pression (27) est agencé de manière à être dans une plage de ± 5 % du rayon de la membrane (21) par rapport à la partie étagée (21c) de la membrane (21) dans la direction parallèle à la surface de la membrane (21).

**FIG.1**

**FIG.2**

FIG.3

FIG.4

FIG.5

with step

FIG.6

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10153510 B
- JP 2010236949 A
- US 20100162821 A
- US 20040226382 A
- US 20130189160 A
- JP 2002111011 A